# EUROPÄISCHE PATENTSCHRIFT

(11) **EP 1 112 440 B1**
(45) Veröffentlichungstag und Bekanntmachung des Hinweises auf die Patenterteilung: **18.06.2003**
(21) Anmeldenummer: 99953533.9
(22) Anmeldetag: 18.08.1999
(51) Int. Cl.: F01D 9/04

(54) **TURBINENLEITSCHAUFEL**
TURBINE GUIDE BLADE
PALE DIRECTRICE DE TURBINE

(30) Priorität: 31.08.1998 DE 19839625
(43) Veröffentlichungstag der Anmeldung: 04.07.2001
(73) Patentinhaber: SIEMENS AKTIENGESELLSCHAFT, 80333 München (DE)
(72) Erfinder: TIEMANN, Peter, D-58452 Witten (DE)
(86) Internationale Anmeldenummer: DE9902595
(87) Internationale Veröffentlichungsnummer: WO00012869

(56) Entgegenhaltungen:
- EP-A- 0 698 723
- GB-A- 1 516 757
- GB-A- 1 605 219
- US-A- 5 135 354
- US-A- 5 797 725

## Beschreibung

Die Erfindung betrifft eine entlang einer Achse gerichtete Turbinenleitschaufel mit einem Schaufelprofil, einer Plattform und einem Befestigungsbereich.

Aus der DE 26 28 807 A1 geht ein Prallkühlsystem für eine Gasturbinenschaufel hervor. Die Gasturbinenschaufel ist entlang einer Schaufelachse gerichtet und weist entlang der Schaufelachse ein Schaufelblatt und einen Plattformbereich auf. Im Plattformbereich erstreckt sich quer zur Schaufelachse eine Plattform vom Schaufelblatt weg radial nach außen. Eine solche Plattform bildet einen Teil eines Strömungskanales für ein Arbeitsfluid, welches eine Gasturbine durchströmt, in die die Turbinenschaufel eingebaut ist. Bei einer Gasturbine treten in diesem Strömungskanal sehr hohe Temperaturen auf. Dadurch wird die dem Heißgas ausgesetzte Oberfläche der Plattform stark thermisch belastet. Zur Kühlung der Plattform ist vor der dem Heißgas abgewandten Seite der Plattform ein gelochtes Wandelement angeordnet. Über die Löcher in dem Wandelement tritt Kühlluft ein und trifft auf die dem Heißgas abgewandte Seite der Plattform. Damit wird eine effiziente Prallkühlung erreicht.

In der EP 0698 723 A2 ist ein Leitschaufelsegment mit einer geschlossenen Dampfkühlung beschrieben. Das Leitschaufelsegment weist einen Plattformbereich auf, der der Begrenzung eines Heissgaskanales einer Gasturbine dient. Der Plattformbereich weist eine abströmseitige Verhakung auf, mit der er lastaufnehmend mit einem Gehäuse einer Dampfturbine verbunden wird. Der Plattformbereich dient somit sowohl einer Heissgasabschirmung als auch einer Lastaufnahme.

In ähnlicher Weise ist eine in der GB-A-1516757 offenbarte Turbinenschaufel ausgebildet. Ein gekühlter Plattformbereich übernimmt auch hier über eine abströmseitige Verhakung mit dem Gehäuse einer Gasturbine sowohl die Lastaufnahme als auch die Heissgasabschirmung.

Aufgabe der Erfindung ist die Angabe einer Turbinenleitschaufel, welche in einfacher und effizienter Weise kühlbar ist.

Erfindungsgemäß wird diese Aufgabe gelöst durch eine entlang einer Achse gerichtete Turbinenleitschaufel mit axial aufeinander folgend:
- einem Schaufelprofil mit einer Profilkontur
- einer Plattform mit einer Heißgasseite zur Begrenzung eines Heißgaskanales einer Turbine und einer der Heißgasseite gegenüberliegende Kaltseite, und
- einem Befestigungsbereich zur Aufnahme des größten Teils mechanischer Belastungen durch ein das Schaufelprofil umströmendes Arbeitsmedium,
wobei die Plattform allenfalls einen geringen Teil dieser mechanischen Belastungen aufzunehmen hat und wobei der Befestigungsbereich bei einer Projektionsansicht entlang der Achse in eine Richtung vom Befestigungsbereich zum Schaufelprofil die Kaltseite zu weniger als drei Vierteln verdeckt.

Eine solche Turbinenleitschaufel weist eine Funktionstrennung für einerseits thermische und andererseits mechanische Belastungen auf: Die thermischen Belastungen werden vor dem Befestigungsbereich weitgehend durch die Plattform aufgenommen. Die Plattform schirmt ein das Schaufslprofil umströmendes Arbeitsmedium gegen den Befestigungsbereich ab und bildet einen Teil eines Strömungskanales einer Turbine, in die die Turbinenleitschaufel eingebaut ist. Die Plattform ist vergleichsweise dünn ausgeführt, damit sie effizient kühlbar ist. Eine solche dünne Ausführung wird dadurch ermöglicht, daß der größte Teil der mechanischen Belastungen welche durch das Arbeitsfluid auf die Turbinenschaufel wirken, von dem Befestigungsteil aufgenommen wird. Die Turbinenleitschaufel ist über das Befestigungsteil in einem Turbinengehäuse befestigbar. Die am Schaufelprofil angreifende, durch das Arbeitsfluid ausgeübte Kraft wird über das Befestigungsteil an das Turbinengehäuse übertragen. Die Plattform muß somit allenfalls einen geringen Teil dieser Krafte aufnehmen und kann somit vergleichsweise dünn ausgeführt werden. Durch das Befestigungsteil kann die Zugänglichkeit der Kaltseite der Plattform z.B. bei einer plattformartigen Ausbildung des Befestigungsteiles eingeschränkt sein. Die Erfindung beseitigt diesen Nachteil durch eine schlanke Ausführung des Befestigungsteiles. Damit verdeckt das Befestigungsteil die Kaltseite nur teilweise. Die Kaltseite bleibt somit z.B. für den Einbau eines Prallkühlbleches gut zugänglich.

Bevorzugt weist der Befestigungsbereich auf:
- einen Kern mit einer zur Profilkontur gleichlaufenden Kern-kontur, welcher Kern mit der Kaltseite verbunden ist;
- einen flächigen Steg, welcher sich entlang der Achse erstreckt und welcher einer Befestigung in einem Turbinenge-hause dient.

Vorzugsweise ist dabei der Kern mit dem Steg über einen versteifenden Verbindungsbereich verbunden. Bevorzugtermaßen verbindet eine vertikale Rippe den Kern und den Steg entlang der Achse versteifend. Vorzugsweise verbindet eine Horizontalrippe den Kern und den Steg senkrecht zur Achse versteifend. Weiter bevorzugt sind vier Vertikalrippen und/oder vier Horizontalrippen vorgesehen.

An dem Steg sind z.B. Vorsprünge oder Verhakungen angeordnet, mit denen die Turbinenleitschaufel im Turbinengehäuse verhakt wird. Durch die Ausbildung des Befestigungsbereiches mit einem Kern und einer versteifenden Verbindung zwischen dem Kern und dem Steg wird eine stabile und doch schlanke Ausführung des Befestigungsbereiches erreicht. Insbesondere durch eine Verrippung mittels der Vertikal- und/oder Horizontalrippen erlangt der Befestigungsbereich eine für den Einsatz der Turbinenleitschaufel ausreichende Steifigkeit.

Vorzugsweise sind bzw. ist die Vertikalrippe bzw. die Vertikalrippen und/oder die Horizontalrippe bzw. die Horizontalrippen einstückig mit dem Kern und mit dem Steg ausgebildet. Bevorzugt ist die Turbinenleitschaufel gegossen und zwar vorzugsweise gerichtet erstarrt oder einkristallin.

Bevorzugt weist die Turbinenleitschaufel eine vor der Kaltseite angeordnete Prallkühlplatte auf, die ihrerseits eine Vielzahl von auf die Kaltseite gerichteten Öffnungen aufweist. Mit einer solchen Prallkühlplatte wird Kühlfluid über die Öffnungen senkrecht auf die Kaltseite geleitet. Durch eine solche Prallkühlung wird die Plattform besonders effizient gekühlt. Durch die gute Zugänglichkeit der Kaltseite kann die Prallkühlplatte sehr einfach eingebaut werden. Die gute Zugänglichkeit der Kaltseite ermöglicht darüber hinaus auch den Einbau eines komplexeren Prallkühlsystems.

Vorzugsweise ist die Turbinenleitschaufel als Gasturbinenleitschaufel ausgelegt. Insbesondere bei einer stationären Gasturbine werden sehr hohe Temperaturen für das die Gasturbine durchströmende Gas erreicht. Dadurch besteht die Notwendigkeit einer sehr effizienten Kühlung der Plattform einer Gasturbinenleitschaufel. Mit dem Konzept einer von der Kaltseite her gut zugänglichen, vergleichsweise dünnen Plattform wird eine sehr wirksame Kühlung erreicht, da sich die Fertigung der Gasturbinenleitschaufel gleichzeitig sehr einfach gestaltet.

Die Erfindung wird anhand der Zeichnung in einem Ausführungsbeispiel teilweise schematisch näher erläutert. Es zeigen:
- FIG 1: eine perspektivische Ansicht einer Gasturbinenleitschaufel aus einer ersten Blickrichtung,
- FIG 2: eine perspektivische Ansicht der Gasturbinenschaufel aus Figur 1 aus einer zweiten Blickrichtung und
- FIG 3: eine Aufsicht auf den Befestigungsbereich einer Gasturbinenleitschaufel.

Gleiche Bezugszeichen haben in verschiedenen Figuren die gleiche Bedeutung.

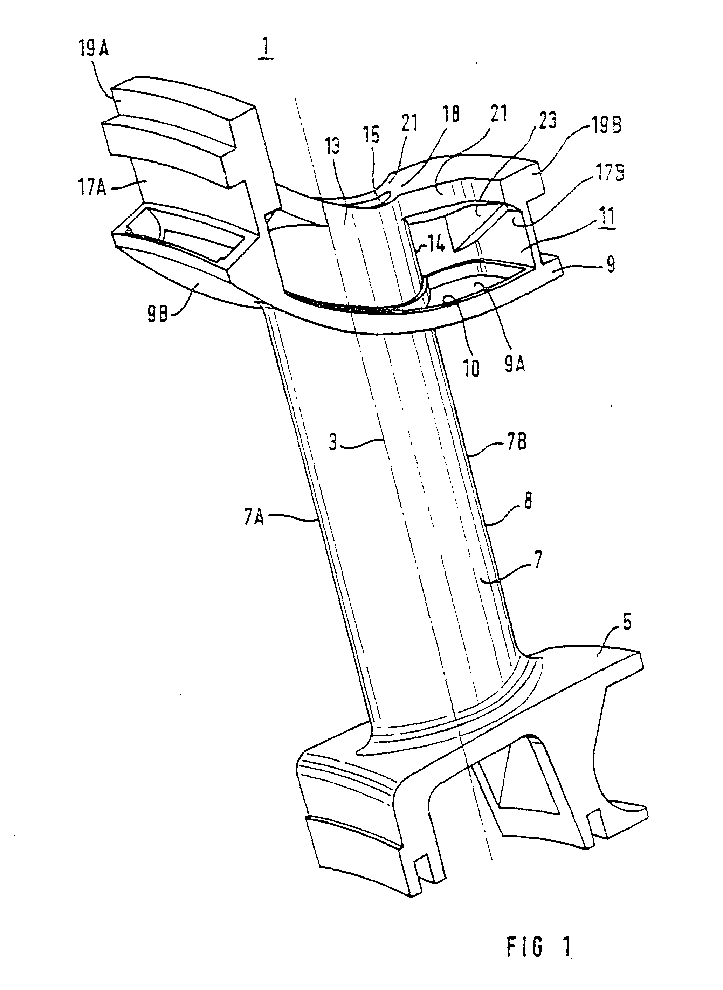

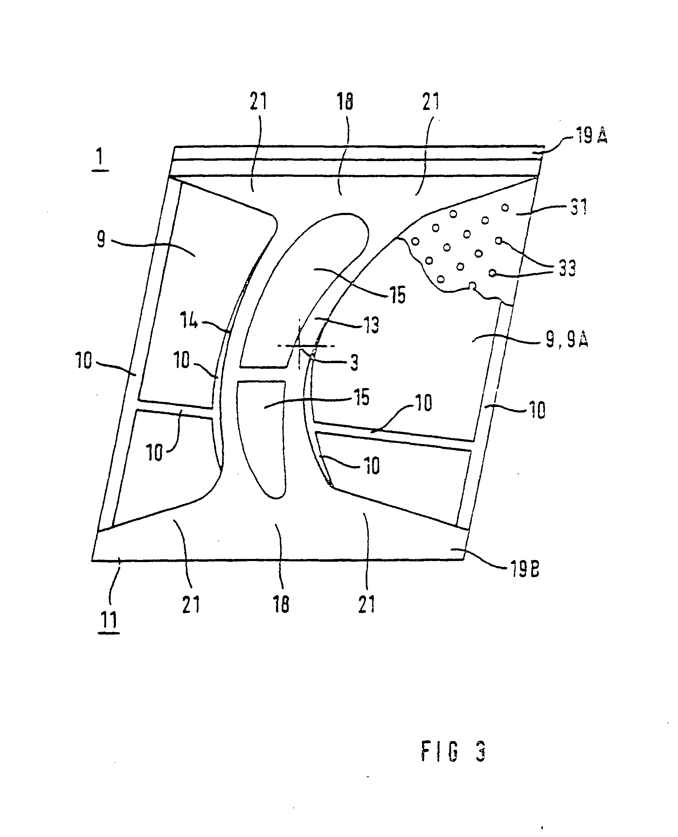

Figur 1 zeigt eine Gasturbinenleitschaufel. Entlang einer Achse 3 erstrecken sich ein Kopfbereich 5, ein Schaufelprofil 7 mit einer Profilkontur 8, eine Plattform 9 und ein Befestigungsbereich 11. Der Kopfbereich 5 dient zur wellenseitigen Abgrenzung und Abdichtung eines nicht dargestellten Heißgaskanales einer Gasturbine, in die die Gasturbinenleitschaufel 1 einbaubar ist. Im eingebauten Zustand ist das Schaufelprofil 7 in diesem Heißgaskanal angeordnet. Die Plattform 9 dient zur gehäuseseitigen Abgrenzung und Abdichtung des Heißgaskanales. Die Plattform 9 weist eine zum Schaufelprofil 7 gerichtete Heißgasseite 9b und eine der Heißgasseite 9b gegenüberliegende Kaltseite 9a auf. Die Plattform 9 ist mit einer umlaufenden Verstrebung 10 versteift. Der Befestigungsbereich 11 dient einer Befestigung der Gasturbinenleitschaufel 1 in einem Turbinengehäuse. Der Befestigungsbereich 11 umfaßt einen Kern 13 mit einer Kernkontur 14. Der Kern 13 ist an der Kaltseite 9a angeordnet und stellt mit seiner Kernkontur 14 geometrisch eine Verlängerung des Schaufelprofiles 7 dar. Der Kern 13 wird von einem Hohlraum 15 durchzogen, welcher auch das Schaufelprofil 7 durchsetzt. In diesen Hohlraum 15 ist Kühlluft zur Kühlung der Gasturbinenleitschaufel 1 einleitbar. An der Kaltseite 9a sind zwei entlang der Achse 3 gerichtete flächige Stege 17 angeordnet. Ein anströmseitiger Steg 17a ist auf der Seite einer Anströmkante 7a des Schaufelprofils 7 angeordnet. Ein abströmseitiger Steg 17b ist auf der Seite einer Abströmkante 7b des Schaufelprofils 7 angeordnet. Zwischen den Stegen 17a, 17b liegt der Kern 13. Der anströmseitige Kern 17a weist einen L-förmigen Vorsprung 19a an seinem Ende auf. Der abströmseitige Steg 17b weist einen quaderförmigen Vorsprung 19b an seinem Ende auf. Mittels der Vorsprünge 19a, 19b wird die Gasturbinenleitschaufel 1 in einem Turbinengehäuse verhakt. Der Kern 13 ist mit den Stegen 17a und 17b in einem Verbindungsbereich 18 versteifend und abgerundet verbunden. Zusätzlich sind vier Horizontalrippen 21 vorgesehen, welche den Befestigungsbereich 11 senkrecht zur Achse 3 versteifen. Je zwei Horizontalrippen 21 sind zwischen einem Steg 17a und 17b und dem Kern 13 angeordnet. Zwischen der Plattform 9 und den Horizontalrippen 21 sind außerdem vier Vertikalrippen 23 vorgesehen und zwar je Horizontalrippe 21 je eine Vertikalrippe 23. Diese Vertikalrippen 23 verbinden den Kern 13 versteifend mit den Stegen 17a, 17b. Es wird eine Versteifung entlang der Achse 3 erreicht. Durch diese Ausführung des Befestigungsbereiches 11 mit dem Kern 13, den Stegen 17a, 17b und den Horizontal- und Vertikalrippen 21, 23 ergibt sich eine sehr stabile Gestaltung des Befestigungsbereiches 11. Gleichzeitig verdeckt aber der Befestigungsbereich 11 die Kaltseite 9a nur teilweise (siehe Figur 3). Die Kaltseite 9a bleibt dadurch gut zugänglich. Hierdurch können fertigungstechnisch in einfacher Weise konstruktive Maßnahmen zur Kühlung der Plattform 9 ergriffen werden. Insbesondere kann in einfacher Weise ein Prallkühlblech (siehe Figur 3) vor der Kaltseite 9a angebracht werden. Weiterhin ergibt sich eine erhebliche Gewichtsersparnis für die Turbinenleitschaufel, was insbesondere für ein Flugtriebwerk interessant ist.

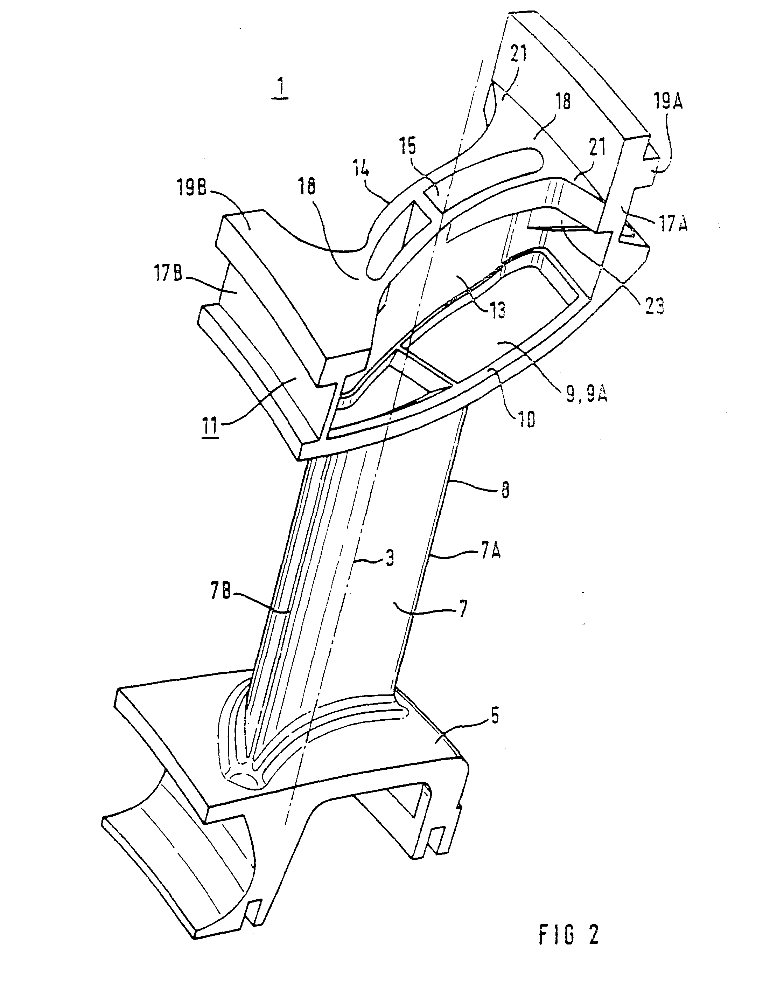

Figur 2 zeigt die Gasturbinenleitschaufel 1 aus Figur 1 in Blickrichtung auf die Abströmkante 7b. In dieser Blickrichtung erkennt man die der anströmseitigen Vertikalverrippung durch die Vertikalrippen 23 entsprechende Vertikalverrippung auf der Anströmseite des Befestigungsbereiches 11.

Figur 3 zeigt eine Projektionsansicht der Gasturbinenleitschaufel 1 aus Figur 1 entlang der Achse 3 in Richtung von dem Befestigungsteil 11 zum Schaufelprofil 7. In dieser Ansicht wird deutlich, daß der Befestigungsbereich 11 die Kaltseite 9a nur teilweise verdeckt. Vorzugsweise bleibt mehr als ein Viertel der Kaltseite 9a sichtbar, d.h. gut zugänglich. Von dem Bereich der Kaltseite 9A ohne den Anteil des Kerns 13 bleibt vorzugsweise mehr als 60% sichtbar. Vor der Kaltseite 9a ist ein Prallkühlblech 31 angeordnet. In dieses Prallkühlblech 31 sind eine Anzahl von Öffnungen 33 eingebracht. Durch diese Öffnungen 33 gelangt Kühlluft senkrecht auf die Kaltseite 9a. Dadurch wird die Kaltseite 9a durch eine Prallkühlung effizient gekühlt. Die Montage des Prallkühlbleches 31 oder auch einer anderen, eventuell komplexeren Kühlanordnung gestaltet sich durch die gute Zugänglichkeit der Kaltseite 9a sehr einfach.

## Patentansprüche

1. Entlang einer Achse (3) gerichtete Turbinenleitschaufel
(1) mit axial aufeinanderfolgend:
• einem Schaufelprofil (7) mit einer Profilkontur (8),
• einer Plattform (9) mit einer Heißgasseite (9B) zur Begrenzung eines Heißgaskanales einer Turbine und einer der Heißgasseite (9B) gegenüberliegenden Kaltseite (9A) und
• einem Befestigungsbereich (11) zur Aufnahme des größten Teiles mechanischer Belastungen durch ein das Schaufelprofil (7) umströmendes Arbeitsmedium, **dadurch gekennzeichnet, daß** die Plattform (9) allenfalls einen geringen Teil dieser mechanischen Belastungen aufzunehmen hat und wobei der Befestigungsbereich (11) bei einer Projektionsansicht entlang der Achse (3) in einer Richtung vom Befestigungsbereich (11) zum Schaufelprofil (7) die Kaltseite (9A) zu weniger als drei Vierteln verdeckt.

2. Turbinenleitschaufel (1) nach Anspruch 1,
bei der der Befestigungsbereich (11) aufweist:
einen Kern (13) mit einer zur Profilkontur (8) gleichlaufenden Kernkontur (14), welcher Kern (13) mit der Kaltseite (9A) verbunden ist;
einen flächigen Steg (17), welcher sich entlang der Achse (3) erstreckt und welcher einer Befestigung in einem Turbinengehäuse dient.

3. Turbinenleitschaufel (1) nach Anspruch 2,
wobei der Kern (13) mit dem Steg (17) über einen versteifenden Verbindungsbereich (18) verbunden ist.

4. Turbinenleitschaufel (1) nach Anspruch 2 oder 3,
bei der eine Vertikalrippe (23) den Kern (13) und den Steg (17) entlang der Achse (3) versteifend verbindet.

5. Turbinenleitschaufel (1) nach Anspruch 2, 3 oder 4,
bei der eine Horizontalrippe (21) den Kern (13)und den Steg (17) senkrecht zur Achse (3) versteifend verbindet.

6. Turbinenleitschaufel (1) nach Anspruch 4,
bei der vier Vertikalrippen (23) vorgesehen sind.

7. Turbinenleitschaufel (1) nach Anspruch 5, bei der vier Horizontalrippen (21) vorgesehen sind.

8. Turbinenleitschaufel (1) nach einem der Ansprüche 4 bis 7, bei der die Vertikalrippe (23) bzw. die Vertikalrippen (23) und/oder die Horizontalrippe (21) bzw. die Horizontalrippen (21) einstückig mit dem Kern (13) und mit den Stegen (17) ausgebildet ist bzw. sind.

9. Turbinenleitschaufel (1) nach Anspruch 8, die gegossen ist.

10. Turbinenleitschaufel (1) nach Anspruch 9,
die einkristallin ausgeführt ist.

11. Turbinenleitschaufel (1) nach Anspruch 9,
die gerichtet erstarrt ist.

12. Turbinenleitschaufel (1) nach einem der vorhergehenden Ansprüche, mit einer vor der Kaltseite (9A) angeordneten Prallkühlplatte (31), die eine Vielzahl von auf die Kaltseite (9A) gerichteten Öffnungen (33) aufweist.

13. Turbinenleitschaufel (1) nach einem der vorhergehenden Ansprüche, für eine, insbesondere stationäre, Gasturbine.

## Claims

1. Turbine guide blade (1) which is directed along an axis (3) and which has, following one another axially:
• a blade profile (7) with a profile contour (8),
• a platform (9) with a hot-gas side (9b) for defining a hot-gas duct of a turbine and a cold side (9a) opposite the hot-gas side (9b), and
• a fastening region (11) for absorbing most of the mechanical loads caused by a working medium flowing around the blade profile (7), **characterized in that** the platform (9) has to absorb at most a small portion of these mechanical loads, and the fastening region (11), in a projected view along the axis (3) in a direction from the fastening region (11) towards the blade profile (7), covering the cold side (9a) by less than three quarters.

2. Turbine guide blade (1) according to Claim 1, in which the fastening region (11) has:
a core (13) with a core contour (14) running in the same direction as the profile contour (8), which core (13) is connected to the cold side (9a);
a planar web (17) which extends along the axis (3) and which serves for fastening in a turbine casing.

3. Turbine guide blade (1) according to Claim 2, the core (13) being connected to the web (17) via a stiffening connecting region (18).

4. Turbine guide blade (1) according to Claim 2 or 3, in which a vertical rib (23) connects the core (13) and the web (17) in a stiffening manner along the axis (3).

5. Turbine guide blade (1) according to Claim 2, 3 or 4, in which a horizontal rib (21) connects the core (13) and the web (17) in a stiffening manner perpendicularly to the axis (3).

6. Turbine guide blade (1) according to Claim 4, in which four vertical ribs (23) are provided.

7. Turbine guide blade (1) according to Claim 5, in which four horizontal ribs (21) are provided.

8. Turbine guide blade (1) according to one of Claims 4 to 7, in which the vertical rib (23) or the vertical ribs (23) and/or the horizontal rib (21) or the horizontal ribs (21) is/are formed in one piece with the core (13) and with the webs (17).

9. Turbine guide blade (1) according to Claim 8, which is cast.

10. Turbine guide blade (1) according to Claim 9, which is of single-crystalline construction.

11. Turbine guide blade (1) according to Claim 9, which is directionally solidified.

12. Turbine guide blade (1) according to one of the preceding claims, having an impingement-cooling plate (31) which is arranged in front of the cold side (9a) and has a multiplicity of openings (33) directed towards the cold side (9a).

13. Turbine guide blade (1) according to one of the preceding claims, for a gas turbine, in particular a stationary gas turbine.

## Revendications

1. Aube (1) directrice de turbine dirigée le long d'un axe (3) et comprenant successivement suivant l'axe :
• un profil (7) d'aube ayant un contour (8) de profil,
• une plate-forme (9) ayant un côté (9B) gaz chaud pour la délimitation d'un canal pour du gaz chaud d'une turbine et un côté (9A) froid opposé au côté (9) gaz chaud, et
• une partie (11) de fixation pour la réception de la plus grande partie des charges mécaniques par un fluide de travail contournant le profil (7) d'aube,
**caractérisée en ce que** la plate-forme (9) a à absorber tout au plus une petite partie de ces charges mécaniques et la partie (11) de fixation recouvre, dans une vue en projection le long de l'axe (3) dans une direction allant de la partie (11) de fixation au profil (7) d'aube, le côté (9A) froid sur moins que les trois quarts.

2. Aube (1) directrice de turbine suivant la revendication 1,
dans laquelle la partie (11) de fixation a :
un noyau (13) ayant un contour (14) de noyau parallèle au contour (8) de profil, ce noyau (13) étant relié au côté (9A) froid ;
un rebord (17) plat qui s'étend le long de l'axe (3) et qui sert à une fixation dans un carter de turbine.

3. Aube (1) directrice de turbine suivant la revendication 2, dans laquelle le noyau (13) est relié au rebord (17) par une partie (18) de liaison de raidissement.

4. Aube (1) directrice de turbine suivant la revendication 2 ou 3, dans laquelle une nervure (23) verticale relie avec raidissement le noyau (13) et le rebord (17) le long de l'axe (3).

5. Aube (1) directrice de turbine suivant la revendication 2, 3 ou 4, dans laquelle une nervure (21) horizontale relie avec raidissement le noyau (13) et le rebord (17) perpendiculairement à l'axe (3).

6. Aube (1) directrice de turbine suivant la revendication 4, dans laquelle il est prévu quatre nervures (23) verticales.

7. Aube (1) directrice de turbine suivant la revendication 5, dans laquelle il est prévu quatre nervures (21) horizontales.

8. Aube (1) directrice de turbine suivant l'une des revendications 4 à 7, dans laquelle la nervure (23) verticale ou les nervures (23) verticales et/ou la nervure (21) horizontale ou les nervures (21) horizontales est ou sont d'un seul tenant avec le noyau (13) et avec les rebords (17).

9. Aube (1) directrice de turbine suivant la revendication 8, qui est coulée.

10. Aube (1) directrice de turbine suivant la revendication 9, qui est monocristalline.

11. Aube (1) directrice de turbine suivant la revendication 5, qui est solidifiée directionnellement.

12. Aube (1) directrice de turbine suivant l'une des revendications précédentes, comprenant une plaque (11) de refroidissement par rebondissement disposée devant le côté (9A) froid et ayant une pluralité d'ouvertures (33) dirigées sur le côté (9A) froid.

13. Aube (1) directrice de turbine suivant l'une des revendications précédentes, pour une turbine à gaz, notamment fixe.
